# EUROPEAN PATENT APPLICATION

(11) **EP 1 935 937 A1**
(43) Date of publication of application: **25.06.2008**
(21) Application number: 06798223.1
(22) Date of filing: 21.09.2006
(51) Int. Cl.: C08L 9/00, C08K 3/36, C08L 15/00

(54) **RUBBER COMPOSITION AND CROSSLINKED OBJECT**

(30) Priority: 22.09.2005 JP 2005275750
(71) Applicant: Kuraray Co., Ltd., Okayama 710-8622 (JP)
(72) Inventor: HIRAYAMA, Yoshio, Kamisu-shi, Ibaraki 314-0197 (JP); HIRATA, Kei, Kamisu-shi, Ibaraki 314-0197 (JP); WADA, Koichi, Kamisu-shi, Ibaraki 314-0197 (JP); SHACHI, Kenji, Kamisu-shi, Ibaraki 314-0197 (JP)
(74) Representative: Müller-Boré & Partner Patentanwälte
(86) International application number: PCT/JP2006/318784
(87) International publication number: WO 2007/034898

(57) **Abstract**

The present invention relates to a rubber composition comprising 100 parts by mass of a solid diene-based rubber (1), 5 to 150 parts by mass of silica (2), 0.1 to 50 parts by mass of a liquid diene-based rubber (3) which is modified with an unsaturated carboxylic acid and/or derivative thereof and has a number average molecular weight of 5000 to 100000, and further 0.1 to 50 parts by mass of an unmodified liquid diene-based rubber (4) having a number average molecular weight of 5000 to 100000 with respect to 100 parts by mass of the solid diene-based rubber (1) and/or 1.5 to 14.0 parts by mass of water (5) with respect to 100 parts by mass of silica (2), and a crosslinked product obtained by crosslinking the rubber composition.

A rubber composition obtained by the present invention is improved in processability when silica is added and mixed with a diene-based rubber and is excellent in dynamic properties after crosslinking.

## Description

### [TECHNICAL FIELD]

The present invention relates to a rubber composition and a crosslinked product.

### [BACKGROUND ART]

In the field of a rubber material, in order to improve dynamic properties such as tensile strength, abrasion resistance, tear strength and the like as well as to provide various physical properties such as heat resistance, oil resistance and the like, depending on the intended use, it has been generally carried out to use the rubber material as a crosslinked rubber composition (crosslinked product) which is obtained by mixing a solid rubber with silica and adding a crosslinking agent to crosslink the resulting mixture.

In addition, in a crosslinkable rubber composition used in a tread part of an automobile tire, a crosslinkable rubber composition blended with silica has been increasingly used in order to minimize rolling resistance to achieve low fuel consumption of an automobile in recent years.

In the case of mixing silica with a solid rubber, especially a diene-based solid rubber, if silica is simply added and mixed with the diene-based solid rubber, it is generally known that the viscosity of the whole composition is increased to deteriorate the processability because of the poor miscibility of silica with the diene-based solid rubber. As a method for improving deterioration of the processability, there is proposed a method for decreasing the viscosity of the whole composition by adding a plasticizer such as an oil and the like in the case of mixing silica with the diene-based solid rubber. However, this method has had a problem that, since the plasticizer makes no contribution to crosslinking, it cannot prevent the deterioration of dynamic properties such as tensile properties, flex properties and the like of the final crosslinked rubber composition (crosslinked product) obtained.

As a method for solving the problem of the deterioration of such dynamic properties, there has been disclosed a method for obtaining a rubber composition by mixing a diene-based solid rubber with a liquid rubber which is obtained by modifying a liquid polyisoprene rubber having a degree of cis-1, 4 bonding of 70% or more and having a molecular weight in the range of 8000 to 100000 with maleic anhydride or its derivative, and a crosslinked product thereof (refer to Patent Document 1). This method may not only improve the processability in the case of mixing silica with a diene-based solid rubber but also improve the physical properties in vulcanization of a crosslinked product obtained from the mixture. On the other hand, there has been disclosed a tire part containing a tire tread containing a modified rubber having a carboxylic acid group or an anhydride group (refer to Patent Document 2).

However, although the crosslinked product obtained in the above-mentioned Patent Document 1 may improve wet skid resistance and rolling resistance, the improvement of dynamic properties was not necessarily sufficient.

In addition, although the tire part of the Patent Document 2 may improve dynamic properties, the improvement of the processability is insufficient because the modified rubber that is considered substantially useful has a number average molecular weight in the range of 200000 to 500000.
Patent Document 1: Japanese Patent Laid-Open Publication No. S55-48231
Patent Document 2: Japanese Unexamined Patent Application Publication No. 2004-524420

### [DISCLOSURE OF THE INVENTION]

### [PROBLEMS TO BE SOLVED BY THE INVENTION]

Thus, an object of the present invention is to provide a rubber composition that may achieve improvement in both the processability in producing a rubber composition by mixing silica with a solid diene-based rubber and the dynamic properties of a crosslinked product of the resulting rubber composition.

### [MEANS FOR SOLVING THE PROBLEMS]

According to the present invention, the above object may be accomplished by providing
[I] a rubber composition containing 100 parts by mass of a solid diene-based rubber (1), 5 to 150 parts by mass of silica (2), 0.1 to 50 parts by mass of a liquid diene-based rubber (3) which is modified with an unsaturated carboxylic acid and/or its derivative and has a number average molecular weight of 5000 to 100000, further containing 0.1 to 50 parts by mass of an unmodified liquid diene-based rubber (4) having a number average molecular weight of 5000 to 100000 with respect to 100 parts by mass of the solid diene-based rubber (1) and/or 1.5 to 14.0 parts by mass of water (5) with respect to 100 parts by mass of silica (2);
[II] a rubber composition containing 100 parts by mass of the solid diene-based rubber (1), 5 to 150 parts by mass of silica (2), 0.1 to 50 parts by mass of the liquid diene-based rubber (3) which is modified by an unsaturated carboxylic acid and/or its derivative and has a number average molecular weight of 5000 to 100000 and 0.1 to 50 parts by mass of the unmodified liquid diene-based rubber (4) having a number average molecular weight of 5000 to 100000;
[III] a rubber composition containing 100 parts by mass of the solid diene-based rubber (1), 5 to 150 parts by mass of silica (2), 0.1 to 50 parts by mass of the liquid diene-based rubber (3) which is modified with an unsaturated carboxylic acid and/or its derivative and has a number average molecular weight of 5000 to 100000 and 1.5 to 14.0 parts by mass of water (5) with respect to 100 parts by mass of silica (2) ;
[IV] a rubber composition containing 100 parts by mass of the solid diene-based rubber (1), 5 to 150 parts by mass of silica (2), 0.1 to 50 parts by mass of the liquid diene-based rubber (3) which is modified by an unsaturated carboxylic acid and/or its derivative and has a number average molecular weight of 5000 to 100000, 0.1 to 50 parts by mass of the unmodified liquid diene-based rubber (4) having a number average molecular weight of 5000 to 100000 and 1.5 to 14.0 parts by mass of water (5) with respect to 100 parts by mass of silica (2);
[V] the rubber composition described in any of the above items [I] to [IV] having a crosslinking agent; and
[VI] a crosslinked product obtained by crosslinking the rubber composition described in the above item [V].

### [EFFECT OF THE INVENTION]

The present invention may provide a rubber composition which may achieve improvement in both the processability in producing a rubber composition by mixing silica with a solid diene-based rubber and the dynamic properties of a crosslinked product of the resulting rubber composition.

### [BEST MODE FOR CARRYING OUT THE INVENTION]

The solid diene-based rubber (1) in the present invention is a solid polymer having rubber elasticity at room temperature and composed of a conjugated diene such as 1,3-butadiene, isoprene, 1,3-pentadiene, 2,3-dimethyl-1,3-butadiene, 2-methyl-1,3-pentadiene, 1,3-hexadiene, 2-methyl-1,3-pentadiene, 4,5-diethyl-1,3-octadiene, 3-butyl-1,3-octadiene and the like. The solid diene-based rubber (1) includes, for example, natural rubber (NR), polyisoprene rubber (IR), polybutadiene rubber (BR), styrene-butadiene copolymer rubber (SBR), styrene-isoprene-butadiene copolymer rubber, acrylonitrile-butadiene copolymer rubber, chloroprene rubber and the like. In addition, the solid diene-based rubber (1) may be used alone or in a combination of two or more kinds thereof. The solid diene-based rubber (1) has a number average molecular weight of preferably 80000 or more and more preferably in the range of 100000 to 3000000, from the viewpoint of sufficiently exhibiting properties in the resulting rubber composition and the crosslinked product. Incidentally, the number average molecular weight in the present specification refers to a number average polystyrene-equivalent molecular weight measured by gel permeation chromatography (GPC).

A rubber composition of the present invention contains 5 to 150 parts by mass of the silica (2) with respect to 100 parts by mass of the diene-based rubber (1). If the content of the silica (2) is less than 5 parts by mass, the crosslinked product obtained by crosslinking the resulting rubber composition has insufficient improvement of physical properties such as abrasion resistance, tensile strength and the like, that is, exhibits unsatisfactory reinforcing properties. If the content of the silica (2) is more than 150 parts by mass, the crosslinked product has insufficient improvement of the processability. From the viewpoint of the reinforcing properties, the content of the silica (2) is preferably in the range of 10 to 120 parts by mass and more preferably in the range of 20 to 100 parts by mass, with respect to 100 parts by mass of the solid diene-based rubber (1).

As the silica (2) in the present invention, there may be used one that has been conventionally used as a rubber-reinforcing agent without particular limitation. The silica (2) includes, for example, dry process white carbon, wet process white carbon, synthetic silicate-based white carbon, colloidal silica, precipitated silica and the like. The specific surface area of the silica (2) is not particularly limited, but is typically in the range of 40 to 600 m²/g and preferably in the range of 70 to 300 m²/g. Furthermore, the silica (2) may be used alone or in a combination of two or more kinds thereof.

A rubber composition of the present invention contains 0.1 to 50 parts by mass of a liquid diene-based rubber (3) (hereinafter, referred to also as "a modified liquid diene-based rubber (3)") which is modified with an unsaturated carboxylic acid and/or its derivative and has a number average molecular weight of 5000 to 100000, with respect to 100 parts by mass of the diene-based rubber (1). If the content of the modified liquid diene-based rubber (3) is less than 0.1 parts by mass, the crosslinked product obtained by crosslinking the resulting rubber composition has insufficient improvement effect of physical properties, and if the content of the rubber (3) is more than 50 parts by mass, the crosslinked product obtained by crosslinking the resulting rubber composition exhibits deteriorated dynamic properties. The content of the modified liquid diene-based rubber (3) is preferably in the range of 0.5 to 45 parts by mass and more preferably in the range of 1 to 40 parts by mass, from the viewpoint of the improvement effect of dynamic properties.

The modified liquid diene-based rubber (3) in the present invention is obtained by modifying an unmodified liquid diene-based rubber with an unsaturated carboxylic acid and/or its derivative. An unmodified liquid rubber, which is used as a raw material of the modified liquid diene-based rubber (3), includes a liquid diene-based rubber that is similar to a liquid diene-based rubber (4) described later.

The unsaturated carboxylic acid includes maleic acid, fumaric acid, itaconic acid and (meth)acrylic acid.
In addition, the above-mentioned unsaturated carboxylic acid derivative includes an unsaturated carboxylic acid anhydride such as maleic anhydride, itaconic anhydride and the like; an unsaturated carboxylic acid ester such as maleate, fumarate, itaconate, glycidyl (meth)acrylate, hydroxyethyl (meth)acrylate and the like; an unsaturated carboxylic acid amide such as maleamide, fumaramide, itaconamide and the like; an unsaturated carboxylic acid imide such as maleimide, itaconimide and the like; and the like.

The modified liquid diene-based rubber (3) may be modified with one of these unsaturated carboxylic acids and unsaturated carboxylic acid derivatives or may be modified with two or more kinds thereof.

In addition, the modified liquid diene-based rubber (3) may be used alone or in a combination of two or more kinds thereof.

Among these, a liquid diene-based rubber modified with maleic anhydride is preferable from the economical viewpoint, and a liquid polyisoprene modified with maleic anhydride is preferable from the viewpoint of sufficiently exhibiting properties of the resulting rubber composition and the crosslinked product.

The modified liquid diene-based rubber (3) may be produced by modifying an unmodified liquid diene-based rubber to be used as a raw material with an unsaturated carboxylic acid and/or its derivative. The method for modifying the unmodified liquid diene-based rubber with the unsaturated carboxylic acid and/or its derivative is not particularly limited, and for example, the modified liquid diene-based rubber (3) may be produced by adding the unsaturated carboxylic acid and/or its derivative to the unmodified liquid diene-based rubber to be used as a raw material. The method of addition is not particularly limited, and for example, there may be adopted a method in which the unsaturated carboxylic acid or its derivative and further a radical catalyst when needed are added into a liquid diene-based rubber and then the resulting mixture is heated in the presence or absence of an organic solvent.

The organic solvent used in the above method typically includes a hydrocarbon-based solvent and a halogenated hydrocarbon-based solvent. Among these organic solvents, preferable is a hydrocarbon-based solvent such as n-butane, n-hexane, n-heptane, cyclohexane, benzene, toluene, xylene and the like. In addition, the radical catalyst used in the above method includes di-s-butylperoxydicarbonate, t-amylperoxy pivalate, t-amylperoxy-2-ethylhexanoate, azobisisobutyronitrile and the like. Among these radical caₜalysts, azobisisobutyronitrile is preferable.

Further, in addition to the above-mentioned method of addition, there may be also adopted a method in which an unsaturated carboxylic acid anhydride is added to an unmodified liquid diene-based rubber to obtain a liquid diene-based rubber modified with an unsaturated carboxylic acid anhydride and further the resulting liquid diene-based rubber modified with an unsaturated carboxylic acid anhydride is reacted with an alcohol, ammonia, amine or the like to obtain a liquid diene-based rubber modified with an unsaturated carboxylic acid ester, a liquid diene-based rubber modified with an unsaturated carboxylic acid amide or a liquid diene-based rubber modified with an unsaturated carboxylic acid imide.

Taking maleic acid and its derivative as an example, as the modified liquid diene-based rubber (3), in addition to an adduct of maleic acid or a maleic acid derivative obtained by reacting maleic acid or a maleic acid derivative such as maleic anhydride, maleamide, maleimide and the like with a liquid diene-based rubber, there may be used a rubber in which one or both of the carboxylic groups of maleic anhydride are esterified, amidized or imidized by reacting an alcohol such as methanol, ethanol, n-propanol and the like or an amine such as ammonia, n-propylamine, n-butylamine and the like with a maleic anhydride group added to the liquid diene-based rubber, for example, in the presence or absence of a catalyst such as p-toluenesulfonic acid and the like.

The amount of addition of the unsaturated carboxylic acid and/or its derivative of the modified liquid diene-based rubber (3) is not limited in a strict sense, but is preferably in the range of 0.1 to 15 mol% and more preferably in the range of 0.1 to 10 mol% based on the total diene monomer units, from the viewpoint of sufficiently exhibiting properties in the resulting rubber composition and the crosslinked product. If the amount of addition of the unsaturated carboxylic acid and/or its derivative is more than 15 mol%, the elongation and tensile strength of the resulting crosslinked product tend to decrease, and if it is less than 0.1 mol%, the abrasion resistance of the resulting crosslinked product tends to decrease.

The modified liquid diene-based rubber (3) has a number average molecular weight in the range of 5000 to 100000 and preferably in the range of 5000 to 70000. If the number average molecular weight is smaller than the above-mentioned range, the dynamic properties of the crosslinked product obtained by crosslinking the resulting rubber composition are significantly decreased, and if the number average molecular weight exceeds the above-mentioned range, the processability in preparing the rubber composition is deteriorated.

The rubber composition of the present invention contains 0.1 to 50 parts by mass of an unmodified liquid diene-based rubber (4) having a number average molecular weight of 5000 to 100000 with respect to 100 parts by mass of the diene-based rubber (1) and/or 1.5 to 14.0 parts by mass of water (5) with respect to 100 parts by mass of the silica (2). In the rubber composition of the present invention, the content of at least one of the unmodified liquid diene-based rubber (4) and water (5) may be in the above-mentioned range. However, the content of both is preferably in the above-mentioned range from the viewpoint of the abrasion resistance of the crosslinked product.

The unmodified liquid diene-based rubber (4) in the present invention is an unmodified liquid polymer obtained by polymerizing a monomer mainly containing a conjugated diene such as 1,3-butadiene, isoprene, 1,3-pentadiene, 2,3-dimethyl-1,3-butadiene, 2-methyl-1,3-pentadiene, 1,3-hexadiene, 2-methyl-1,3-pentadiene, 4,5-diethyl-1,3-octadiene, 3-butyl-1,3-octadiene and the like. The unmodified liquid diene-based rubber (4) includes, for example, a liquid diene-based rubber and the like such as liquid polybutadiene, liquid polyisoprene, liquid styrene-butadiene random copolymer, liquid styrene-butadiene block copolymer, liquid butadiene-isoprene random copolymer, liquid butadiene-isoprene block copolymer, liquid styrene-butadiene-isoprene random copolymer, liquid styrene-butadiene-isoprene block copolymer and the like. As the unmodified liquid diene-based rubber (4), the above-mentioned liquid polymer may be used alone or in a combination of two or more kinds thereof. Among these, a liquid polyisoprene or liquid styrene-butadiene random copolymer is preferably used as the unmodified liquid diene-based rubber (4) from the viewpoint of sufficiently exhibiting properties of the resulting rubber composition and the crosslinked product.

The unmodified liquid diene-based rubber (4) has a number average molecular weight in the range of 5000 to 100000 and preferably in the range of 5000 to 70000. If the number average molecular weight of the liquid diene-based rubber (4) is smaller than the above-mentioned range, the dynamic properties of the crosslinked product obtained by crosslinking the rubber composition of the present invention are significantly decreased, and if the number average molecular weight is larger than the above-mentioned range, the processability in preparing the rubber composition is deteriorated.

If the rubber composition of the present invention contains the unmodified liquid diene-based rubber (4), the content is in the range of 0.1 to 50 parts by mass with respect to 100 parts by mass of the diene-based rubber (1). If the content of the unmodified liquid diene-based rubber (4) is less than 0.1 parts by mass, sufficient improvement effect of the processability may not be obtained. In addition, if the content of the unmodified liquid diene-based rubber (4) is more than 50 parts by mass, the dynamic properties of the crosslinked product obtained by crosslinking the resulting rubber composition are deteriorated. The content of the unmodified liquid diene-based rubber (4) is preferably in the range of 0.5 to 45 parts by mass and more preferably in the range of 1 to 40 parts by mass from the viewpoint of improving the processability.

The method for producing the unmodified liquid diene-based rubber (4) is not particularly limited, and for example, an anion polymerization method may be adopted. In that case, an unmodified liquid diene-based rubber (4) may be produced by polymerizing the above-mentioned conjugated diene generally at a polymerization temperature in the range of -100 to 100°C for 0.01 to 200 hours, using as an initiator an alkali metal such as metal sodium, metal lithium and the like and an alkyl lithium compound such as methyl lithium, ethyl lithium, n-butyl lithium, s-butyl lithium, and the like, for example, in a solvent inactive to the polymerization reaction such as hexane, cyclohexane, benzene, toluene and the like, under an inert gas atmosphere such as argon, nitrogen and the like.

The ratio of the unmodified liquid diene-based rubber (4) to the modified liquid diene-based rubber (3) is preferably in the range of 5/95 to 95/5 and more preferably in the range of 20/80 to 70/30 by mass ratio. If the mass ratio of the unmodified liquid diene-based rubber (4) to the modified liquid diene-based rubber (3) is less than 5/95, that is, if the ratio of the modified liquid diene-based rubber (3) is more than 95% by mass, the elongation and tensile strength of the resulting crosslinked product tend to decrease, and if the mass ratio of the unmodified liquid diene-based rubber (4) to the modified liquid diene-based rubber (3) is more than 95/5, that is, if the ratio of the modified liquid diene-based rubber (3) is less than 5% by mass, the abrasion resistance of the resulting crosslinked product tends to decrease.

If a rubber composition of the present invention contains water (5), the content is in the range of 1.5 to 14.0 parts by mass with respect to 100 parts by mass of the silica (2) . If the content of the water (5) is less than 1.5 parts by mass, the processability of the resulting rubber composition is deteriorated, and if the content is more than 14.0 parts by mass, the dynamic properties of the crosslinked product obtained by crosslinking the resulting rubber composition are deteriorated. The content of the water (5) is preferably in the range of 2.0 to 13.5 parts by mass, more preferably in the range of 3.0 to 13.0 parts by mass and further more preferably in the range of 5.5 to 9.0 parts by mass from the viewpoint of the processability and the dynamic properties.

The crosslinking properties may be imparted by adding a crosslinking agent to a rubber composition of the present invention. As the crosslinking agent, there may be used one that is typically used for the crosslinking of rubber without any particular limitation. The above-mentioned crosslinking agent includes, for example, a sulfur crosslinking agent such as sulfur, morpholine disulfide, alkyl phenol disulfide and the like; an organic peroxide crosslinking agent such as cyclohexanone peroxide, methylacetoacetate peroxide, tert-butylperoxyisobutyrate, tert-butylperoxybenzoate, benzoyl peroxide, lauroyl peroxide, dicumyl peroxide, di-tert-butyl peroxide, 1,3-bis(tert-butylperoxyisopropyl)benzene and the like; and others. The content of a crosslinking agent is preferably in the range of 0.1 to 15 parts by mass and more preferably in the range of 0.3 to 10 parts by mass with respect to 100 parts by mass of the diene-based rubber (1) from the viewpoint of the dynamic properties of the crosslinked product.

A crosslinking accelerator and a crosslinking auxiliary agent may be blended with a rubber composition of the present invention, where necessary. The crosslinking accelerator and crosslinking auxiliary agent are not particularly limited and may be accordingly selected and used depending on the crosslinking agent used. The crosslinking accelerator includes, for example, a thiuram-based accelerator such as tetramethylthiuram monosulfide, tetramethylthiuram disulfide, tetraethylthiuram disulfide and the like; a thiazole-based accelerator such as 2-mercaptobenzothiazole, dibenzothiazyl disulfide and the like; a sulfenamide-based accelerator such as N-cyclohexyl-2-benzothiazyl sulfenamide, N-oxydiethylene-2-benzothiazolyl sulfenamide and the like; a guanidine-based accelerator such as N,N'-diphenylguanidine, di(o-tolyl)guanidine and the like; an aldehyde-amine-based accelerator such as n-butyraldehyde-aniline condensate, butyraldehyde-monobutylamine condensate and the like; an aldehyde-ammonia-based accelerator such as hexamethylenetetramine and the like; a thiourea-based accelerator such as thiocarbanilide; and the like. If these crosslinking accelerators are blended, they may be used alone or in a combination of two or more kinds thereof. The content of the crosslinking accelerator is preferably in the range of 0.1 to 15 parts by mass and more preferably in the range of 0.3 to 10 parts by mass with respect to 100 parts by mass of the diene-based rubber (1) from the viewpoint of the vulcanizing rate and the dynamic properties of the crosslinked product.

In addition, the crosslinking auxiliary agent includes a metal oxide such as zinc oxide, magnesium oxide and the like; a metal hydroxide such as calcium hydroxide and the like; a metal carbonate such as zinc carbonate, basic zinc carbonate and the like; a fatty acid such as stearic acid, oleic acid and the like; a fatty acid metal salt such as zinc stearate, magnesium stearate and the like; amines such as di-n-butylamine, dicyclohexylamine and the like; ethylenedimethacrylate, diallylphthalate, N,N'-m-phenylenedimaleimide, triallylisocyanurate, trimethylolpropanetrimethacrylate and the like. If these crosslinking auxiliary agents are blended, they may be used alone or in a combination of two or more kinds thereof. The content of the crosslinking auxiliary agent is preferably in the range of 0.1 to 15 parts by mass and more preferably in the range of 0.3 to 10 parts by mass with respect to 100 parts by mass of the diene-based rubber (1) from the viewpoint of the processability and the dynamic properties of the crosslinked product.

To a rubber composition of the present invention, there may be added as an additive a silane-coupling agent that is generally used in blending silica with a rubber composition. The silane coupling agent includes, for example, vinyltrichlorosilane, vinyltriethoxysilane, vinyltris(β-methoxy-ethoxy)silane, β-(3,4-epoxycyclohexyl)ethyltrimethoxysilane, 3-chloropropyltrimethoxysilane, 3-chloropropyltriethoxysilane, 3-mercaptopropyltrimethoxysilane, 3-mercaptopropyltriethoxysilane, bis(3-(triethoxysilyl)propyl)tetrasulfide, bis(3-(triethoxysilyl)propyl)disulfide, and the like. The content of the silane coupling agent is preferably in the range of 0.1 to 30 parts by mass and more preferably in the range of 1 to 20 parts by mass with respect to 100 parts by mass of the silica (2) from the viewpoint of the processability and the dynamic properties of the crosslinked product.

To a rubber composition of the present invention, there may be added carbon black such as furnace black, acetylene black, thermal black, channel black, graphite and the like, an organic fiber such as a polyamide fiber and the like, and others as a reinforcing agent which is typically added for reinforcing the rubber composition within the range of not impairing the properties of the present invention, and there may be added as a plasticizer, for example, paraffin-based process oil, naphthene-based process oil, aromatic-based process oil and the like. Further, to the rubber composition of the present invention, there may be added various blending agents such as an anti-aging agent, a filler and the like within the range of not impairing the properties.

A rubber composition of the present invention may be produced by applying a method that is typically used as a production method of a rubber composition. For example, the rubber composition may be produced by blending the diene-based rubber (1), silica (2), modified liquid diene-based rubber (3), unmodified liquid diene-based rubber (4), water (5) and other components such as the above-mentioned crosslinking agent, crosslinking accelerator, crosslinking auxiliary agent and the like when needed, using a Brabender mixer, a Bunbury mixer, a roll kneader and the like.

In addition, a crosslinked product may be produced, for example, by a method in which a rubber composition of the present invention containing a crosslinking agent is crosslinked by hot press using a press molding machine, a method of molded crosslinking and the like.

### [EXAMPLES]

Hereinafter, the present invention will be specifically explained by Examples. The present invention is not at all limited by these Examples.

### Reference Example 1

An autoclave having a capacity of 5 liters, the air in which was replaced with nitrogen, was charged with 1000 g of hexane and 5.0 g of sec-butyl lithium and then the mixture was heated to 50°C, 1000 g of isoprene was added and polymerization was carried out for 3 hours. Next, the polymerization reaction mixture was washed with water and dried at 90°C for 12 hours using a vacuum dryer to obtain a liquid polyisoprene (hereinafter, abbreviated as L-IR). A part of the L-IR was sampled and subjected to a GPC analysis. It was found that the number average polystyrene-equivalent molecular weight Mn was 19500 and the ratio (Mw/Mn) of the weight average molecular weight Mw to the number average molecular weight Mn was 1.06.

### Reference Example 2

An autoclave having a capacity of 5 liters, the air in which was replaced with nitrogen, was charged with 1400 g of hexane and 7.7 g of sec-butyl lithium and then the mixture was heated to 50°C, 125 g of styrene, 505 g of butadiene and 7 g of N,N,N',N'-tetramethylethylenediamine was added and polymerization was carried out for 3 hours. Next, the polymerization reaction mixture was washed with water and dried at 90°C for 12 hours using a vacuum dryer to obtain a liquid styrene-butadiene random copolymer (hereinafter, abbreviated as L-SBR). A part of the L-SBR was sampled and subjected to a GPC analysis. It was found that the number average polystyrene-equivalent molecular weight Mn was 8400 and the ratio (Mw/Mn) of the weight average molecular weight Mw to the number average molecular weight Mn was 1.06.

### Reference Example 3

<1> An autoclave having a capacity of 5 liters, the air in which was replaced with nitrogen, was charged with 2000 g of hexane and 2.5 g of n -butyl lithium and then the mixture was heated to 50°C, 650 g of isoprene was added and polymerization was carried out for 3 hours. Next, the polymerization reaction mixture was washed with water and dried at 90°C for 12 hours using a vacuum dryer to obtain a liquid polyisoprene. A part of the liquid polyisoprene was sampled and subjected to a GPC analysis. It was found that the number average polystyrene-equivalent molecular weight Mn was 27000 and the ratio (Mw/Mn) of the weight average molecular weight Mw to the number average molecular weight Mn was 1.18.
<2> An autoclave having a capacity of 1 liter was charged with 400 g of the liquid polyisoprene obtained in the above

<1> and 6 g of maleic anhydride and then reacted at 160°C for 16 hours to obtain a modified liquid polyisoprene (hereinafter, abbreviated as MA-L-IR) in which 1.0 mol% of maleic anhydride was added based on the total isoprene monomer units. A part of MA-L-IR was sampled and subjected to a GPC analysis. It was found that the number average polystyrene-equivalent molecular weight Mn was 31000 and the ratio (Mw/Mn) of the weight average molecular weight Mw to the number average molecular weight Mn was 1.33.

### Example 1

<1> Silica (trade name: Nipsil AQ, manufactured by Nihon Silica Corporation) was dried in vacuo at 80°C for 1 hour to remove the surface moisture of silica.
<2> A rubber composition was obtained by kneading a styrene-butadiene rubber (SBR; trade name: TUFDENE 2000R, manufactured by Asahi Kasei Chemicals Corporation, the number average molecular weight Mn=170000), silica obtained in the above <1>, L-IR obtained in Reference Example 1, MA-L-IR obtained in Reference Example 3, water, an aromatic-based process oil (trade name: JSO AROMA 790, manufactured by Japan Sun Oil Co., Ltd.), a silane coupling agent (trade name: Si-75, manufactured by Degussa Japan Co., Ltd.) and an anti-aging agent [trade name: NOCRAC 6C (N-phenyl-N'-1,3-dimethylbutyl-p-phenylenediamine), manufactured by Ouchishinko Chemical Industrial Co., Ltd.] at the blending ratio shown in Table 1 for 6 min using a Bunbury mixer set at 65°C. A crosslinkable rubber composition was obtained by blending zinc oxide, stearic acid, sulfur, a crosslinking accelerator [trade name: Nocceler CZ (N-cyclohexyl-2-benzothiazyl-sulfenamide) and Nocceler D (N,N'-diphenylguanidine), manufactured by Ouchishinko Chemical Industrial Co., Ltd.] with the resulting rubber composition at the blending ratio shown in Table 1 for 5 min using an open roll set at 60°C. The Mooney viscosity at 100°C was measured for the resulting crosslinkable rubber composition in accordance with JIS K 6300 and the processability was evaluated by a value of ML₁₊₄. The lower the value is, the more excellent the processability is.
<3> The crosslinkable rubber composition obtained in the above <2> was crosslinked by pressing at 160°C for 15 min to obtain a sheet of the crosslinked rubber composition (crosslinked product) having a thickness of 2 mm.

A dumbbell-shaped No. 3 test specimen was punched out from the resulting crosslinked product sheet and a tensile test was performed on the test specimen in accordance with JIS K 6251 to determine its 300% modulus, tensile strength and elongation at break. In a similar way, an angle-shaped test specimen without notch was punched out from the crosslinked product sheet and a tear test was performed on the test specimen in accordance with JIS K 6252 to determine its tear strength. The results are shown in Table 1.
<4> A test specimen of 10 mm in length, 10 mm in width and 2 mm in thickness was prepared from a sheet of the rubber composition (crosslinked product) obtained in the above <3> and the temperature dependence of tan δ was measured under the measuring conditions of a frequency of 11 Hz and a measurement temperature range of -20 to 100°C using RHEOVIBRON-DDV-III (manufactured by Orientec Co., Ltd.) (dynamic viscoelasticity test) . The values of tan δ at 0°C and 60°C are shown in Table 1. In general, the tan δ at 0°C may be used as an index of wet skid resistance. The higher the tan δ value at 0°C is, the better the braking performance on a wet road surface is. In addition, the tan δ at 60°C may be used as an index of rolling resistance. The lower the tan δ value at 60°C, the smaller the heat generation, and when the crosslinked product is used in a tire, low fuel consumption is achieved and the durability of the tire is good.
<5> The crosslinkable rubber composition obtained in the above <2> was crosslinked by pressing at 160°C for 15 min to obtain a test specimen for the flex cracking test having a length of 150 mm, a width of 25 mm, a thickness of 6.3 mm and a groove with a radius of 2.38 mm at the center. The resulting test specimen was notched to a depth of 2 mm to measure the number of flexing cycles until the cracking size grows from 2 mm to 8 mm in accordance with JIS K 6260. The results are shown in Table 1.
<6> The crosslinkable rubber composition obtained in the above <2> was crosslinked by pressing at 160°C for 15 min to obtain a ring-shaped test specimen for the Akron abrasion test having a diameter of 63.5 mm, a thickness of 12.7 mm and a center opening of 12.7 mm. An Akron abrasion tester was set at an angle of 15°and under a load of 27.0 N to perform the Akron abrasion test in accordance with JIS K 6264. The abrasion volume after the test is shown in Table 1.

### Example 2

In Example 2, a rubber composition (uncrosslinked product) and a crosslinked product were obtained by performing similar operations to those of Example 1 except that L-SBR obtained in Reference Example 2 was used at the blending ratio shown in Table 1 instead of L-IR. The results of the Mooney viscosity of the resulting uncrosslinked product and the results of the tensile test, tear test, dynamic viscoelasticity test, flex cracking test and abrasion test of the crosslinked product are shown in Table 1.

### Example 3

In Example 3, a rubber composition (uncrosslinked product) and a crosslinked product were obtained by performing similar operations to those of Example 1 except that water was not added. The results of the Mooney viscosity of the resulting uncrosslinked product and the results of the tensile test, tear test, dynamic viscoelasticity test, flex cracking test and abrasion test of the crosslinked product are shown in Table 1.

### Examples 4 and 5

In Examples 4 and 5,a rubber composition (uncrosslinked product) and a crosslinked product were obtained by performing similar operations to those of Example 1 except that L-IR was not added and MA-L-IR and water were used at the blending ratio shown in Table 1. The results of the Mooney viscosity of the resulting uncrosslinked product and the results of the tensile test, tear test, dynamic viscoelasticity test, flex cracking test and abrasion test of the crosslinked product are shown in Table 1.

### Comparative Example 1

In Comparative Example 1, a rubber composition (uncrosslinked product) and a crosslinked product were obtained by performing similar operations to those of Example 1 except that L-IR and MA-L-IR were not added. The results of the Mooney viscosity of the resulting uncrosslinked product and the results of the tensile test, tear test, dynamic viscoelasticity test, flex cracking test and abrasion test of the crosslinked product are shown in Table 1.

### Comparative Example 2

In Comparative Example 2, a rubber composition (uncrosslinked product) and a crosslinked product were obtained by performing similar operations to those of Example 1 except that MA-L-IR was not added and L-IR was used at the blending ratio shown in Table 1. The results of the Mooney viscosity of the resulting uncrosslinked product and the results of the tensile test, tear test, dynamic viscoelasticity test, flex cracking test and abrasion test of the crosslinked product are shown in Table 1.

### Comparative Example 3

In Comparative Example 3, a rubber composition (uncrosslinked product) and a crosslinked product were obtained by performing similar operations to those of Example 1 except that MA-L-IR was not added and L-SBR was used at the blending ratio shown in Table 1. The results of the Mooney viscosity of the resulting uncrosslinked product and the results of the tensile test, tear test, dynamic viscoelasticity test, flex cracking test and abrasion test of the crosslinked product are shown in Table 1.

### Comparative Examples 4 and 5

In Comparative Examples 4 and 5, a rubber composition (uncrosslinked product) and a crosslinked product were obtained by performing similar operations to those of Example 4 except that water was used at the blending ratio shown in Table 1. The results of the Mooney viscosity of the resulting uncrosslinked product and the results of the tensile test, tear test, dynamic viscoelasticity test, flex cracking test and abrasion test of the crosslinked product are shown in Table 1.

**[Table 1]**

| | Example | | | | | Comparative Example | | | | |
|---|---|---|---|---|---|---|---|---|---|---|
| | 1 | 2 | 3 | 4 | 5 | 1 | 2 | 3 | 4 | 5 |
| Blending ratio (parts by mass) | | | | | | | | | | |
| SBR¹⁾ | 100 | 100 | 100 | 100 | 100 | 100 | 100 | 100 | 100 | 100 |
| L-IR | 2.5 | - | 2.5 | - | - | - | 5 | - | - | - |
| L-SBR | - | 2.5 | - | - | - | - | - | 5 | - | - |
| MA-L-IR | 2.5 | 2.5 | 2.5 | 5 | 5 | - | - | - | 5 | 5 |
| Silica²⁾ | 60 | 60 | 60 | 60 | 60 | 60 | 60 | 60 | 60 | 60 |
| Water | 5.2 | 5.2 | - | 3.5 | 5.4 | 5.2 | 5.2 | 5.2 | 0.6 | 8.8 |
| Aromatic-Based Process Oil³⁾ | 20 | 20 | 20 | 20 | 20 | 20 | 20 | 20 | 20 | 20 |
| Silane Coupling Agent⁴⁾ | 4.2 | 4.2 | 4.2 | 4.2 | 4.2 | 4.2 | 4.2 | 4.2 | 4.2 | 4.2 |
| Zinc Oxide | 3 | 3 | 3 | 3 | 3 | 3 | 3 | 3 | 3 | 3 |
| Stearic Acid | 2 | 2 | 2 | 2 | 2 | 2 | 2 | 2 | 2 | 2 |
| Nocrac 6C⁵⁾ | 1.5 | 1.5 | 1.5 | 1.5 | 1.5 | 1.5 | 1.5 | 1.5 | 1.5 | 1.5 |
| Sulfur | 2 | 2 | 2 | 2 | 2 | 2 | 2 | 2 | 2 | 2 |
| Nocceler CZ⁶⁾ | 1.5 | 1.5 | 1.5 | 1.5 | 1.5 | 1.5 | 1.5 | 1.5 | 1.5 | 1.5 |
| Nocceler D⁷⁾ | 2 | 2 | 2 | 2 | 2 | 2 | 2 | 2 | 2 | 2 |

| Physical Properties of Uncrosslinked Product | | | | | | | | | | |
|---|---|---|---|---|---|---|---|---|---|---|
| Mooney Viscosity (ML₁₊₄, 100°C) | 54 | 53 | 58 | 57 | 59 | 58 | 50 | 47 | 71 | 49 |

| Physical Properties of Crosslinked Product | | | | | | | | | | |
|---|---|---|---|---|---|---|---|---|---|---|
| 300% Modulus (MPa) | 11 | 11 | 11 | 10 | 9 | 9 | 6 | 7 | 8 | 7 |
| Tensile Strength (MPa) | 23 | 25 | 24 | 21 | 20 | 19 | 22 | 22 | 21 | 15 |
| Elongation at Break (%) | 610 | 630 | 620 | 650 | 650 | 540 | 760 | 660 | 670 | 480 |
| Tear Strength (N/mm) | 58 | 68 | 60 | 54 | 58 | 55 | 50 | 54 | 53 | 52 |
| Tan δ (0°C) | 0.160 | 0.160 | 0.162 | 0.169 | 0.189 | 0.161 | 0.156 | 0.177 | 0.172 | 0.157 |
| Tan δ (60°C) | 0.128 | 0.128 | 0.129 | 0.114 | 0.121 | 0.151 | 0.143 | 0.164 | 0.129 | 0.116 |
| Flex Test (number of flexing cycles) | 4750 | 4000 | 4500 | 4500 | 4750 | 3500 | 9000 | 4500 | 4000 | 3500 |
| Abrasion Test (cm³) | 0.03 | 0.03 | 0.05 | 0.05 | 0.05 | 0.11 | 0.10 | 0.11 | 0.08 | 0.10 |

| | | | | | | | | | | |
|---|---|---|---|---|---|---|---|---|---|---|
| 1) SBR: TUFDENE 2000R, manufactured by Asahi Kasei Chemicals Corporation 2) Silica: Nipsil AQ, manufactured by Nihon Silica Corporation 3) Aromatic-based process oil: JSO AROMA 790, manufactured by Japan Sun Oil Co., Ltd. 4) Silane coupling agent: Si-75, manufactured by Degussa Japan Co., Ltd. 5) Anti-aging agent (N-phenyl-N'-1,3-dimethylbutyl-p-phenylenediamine, manufactured by Ouchishinko Chemical Industrial Co., Ltd.) 6) Crosslinking accelerator (N-cyclohexyl-2-benzothiazyl-sulfeneamide, manufactured by Ouchishinko Chemical Industrial Co., Ltd.) 7) Crosslinking accelerator (N,N'-diphenylguanidine, manufactured by Ouchishinko Chemical Industrial Co., Ltd.) | | | | | | | | | | |

As is clear from Table 1, the rubber compositions of Examples 1 to 5 satisfying the requirements of the present invention have a low Mooney viscosity and are excellent in molding processability, and the crosslinked products obtained from the rubber compositions are excellent in 300% modulus, tensile strength, elongation at break, tear strength, wet skid resistance (tan δ at 0°C), rolling resistance (tan δ at 60°C), flex properties and abrasion resistance.

On the contrary, the crosslinked product of Comparative Example 1 not having the unmodified liquid diene-based rubber (4) and modified liquid diene-based rubber (3) is inferior in 300% modulus, tensile strength, elongation at break, rolling resistance (tan δ at 60°C), flex properties and abrasion resistance, as compared to the crosslinked products of Examples 1 to 4. In addition, the crosslinked product of Comparative Example 1 is inferior in tensile strength, elongation at break, tear strength, rolling resistance (tan δ at 60°C), flex properties and abrasion resistance, as compared to the crosslinked product of Example 5.

The crosslinked products of Comparative Examples 2 and 3 not having the modified liquid diene-based rubber (3) are inferior in 300% modulus, rolling resistance (tan δ at 60°C) and abrasion resistance. In addition, the crosslinked products of Comparative Examples 2 and 3 are inferior in 300% modulus, tensile strength, tear strength, rolling resistance (tan δ at 60°C) and abrasion resistance as compared to the crosslinked products of Examples 1 to 3, and are inferior in 300% modulus and rolling resistance (tan δ at 60°C) as compared to the crosslinked product of Example 4, and are inferior in 300% modulus, tear strength, rolling resistance (tan δ at 60°C) and abrasion resistance as compared to the crosslinked product of Example 5.

The rubber composition of Comparative Example 4 in which the content of water (5) is less than the range specified by the present invention has a high Mooney viscosity and is inferior in molding properties. In addition, the crosslinked product of Comparative Example 4 is inferior in 300% modulus, tensile strength, tear strength and abrasion resistance as compared to the crosslinked products of Examples 1 to 3. Furthermore, the crosslinked product of Comparative Example 4 is inferior in 300% modulus, tear strength and abrasion resistance as compared to the crosslinked products of Examples 4 and 5.

In addition, the rubber composition of Comparative Example 5 in which the content of water (5) is more than the range specified by the present invention is inferior in 300% modulus, tensile strength, elongation at break, tear strength, wet skid resistance (tan δ at 0°C) and abrasion resistance.

### [INDUSTRIAL APPLICABILITY]

A rubber composition of the present invention may be suitably used for applications to tires, industrial members such as industrial belts, industrial rubber hoses and the like, because it is excellent in processability and provides a crosslinked product having improved dynamic properties when it is modified into a crosslinkable rubber composition by adding a crosslinking agent.

## Claims

1. A rubber composition comprising 100 parts by mass of a solid diene-based rubber (1), 5 to 150 parts by mass of silica (2), 0.1 to 50 parts by mass of a liquid diene-based rubber (3) which is modified with an unsaturated carboxylic acid and/or a derivative thereof and has a number average molecular weight of 5000 to 100000, and further 0.1 to 50 parts by mass of an unmodified liquid diene-based rubber (4) having a number average molecular weight of 5000 to 100000 with respect to 100 parts by mass of the solid diene-based rubber (1) and/or 1.5 to 14.0 parts by mass of water (5) with respect to 100 parts by mass of silica (2).

2. A rubber composition comprising 100 parts by mass of a solid diene-based rubber (1), 5 to 150 parts by mass of silica (2), 0.1 to 50 parts by mass of a liquid diene-based rubber (3) which is modified by an unsaturated carboxylic acid and/or a derivative thereof and has a number average molecular weight of 5000 to 100000 and 0.1 to 50 parts by mass of an unmodified liquid diene-based rubber (4) having a number average molecular weight of 5000 to 100000.

3. A rubber composition comprising 100 parts by mass of a solid diene-based rubber (1), 5 to 150 parts by mass of silica (2), 0.1 to 50 parts by mass of a liquid diene-based rubber (3) which is modified with an unsaturated carboxylic acid and/or a derivative thereof and has a number average molecular weight of 5000 to 100000 and 1.5 to 14.0 parts by mass of water (5) with respect to 100 parts by mass of silica (2).

4. A rubber composition comprising 100 parts by mass of a solid diene-based rubber (1), 5 to 150 parts by mass of silica (2), 0.1 to 50 parts by mass of a liquid diene-based rubber (3) which is modified by an unsaturated carboxylic acid and/or a derivative thereof and has a number average molecular weight of 5000 to 100000, 0.1 to 50 parts by mass of an unmodified liquid diene-based rubber (4) having a number average molecular weight of 5000 to 100000 and 1.5 to 14.0 parts by mass of water (5) with respect to 100 parts by mass of silica (2).

5. The rubber composition according to any of claims 1 to 4, wherein the composition further contains a crosslinking agent.

6. A crosslinked product obtained by crosslinking the rubber composition according to claim 5.
